# EUROPEAN PATENT APPLICATION

(11) **EP 1 887 312 A1**
(43) Date of publication of application: **13.02.2008**
(21) Application number: 07113069.4
(22) Date of filing: 24.07.2007
(51) Int. Cl.: G01B 9/02, G01N 21/47

(54) **Imaging optical coherence tomography with dynamic coherent Focus**

(30) Priority: 28.07.2006 US 833810 P
(71) Applicant: Heliotis AG, 8048 Zürich (CH)
(72) Inventor: Seitz, Peter c/o SCEM SA, 8902 Urdorf (CH)
(74) Representative: Schneider Feldmann AG Patent- und Markenanwälte

(57) **Abstract**

An imaging optical coherence tomography (OCT) apparatus with high transverse and high axial resolution comprises an interferometer of the Michelson, Mach-Zehnder or Kösters type. Light returning in the reference beam path (27) and the object beam path (26) interferes and is detected by an image sensor (28, 45) in the detection beam path (25). A single electromechanical linear scanner displaces the plane reference mirror (34, 51), the object imaging lens (33, 50), and the reference imaging lens (35, 52) along the optical axis. By providing identical lenses in the reference beam path (27) and in the object beam path (26), the geometrical displacement of the measurement focus in the object beam path (26) is equal to the change in optical length in the reference beam path (27), thus allowing dynamic coherent focus over the full scanning distance. All optical elements that must be replaced to obtain a different optical magnification can be arranged in an exchangeable cartridge (32, 49). The OCT image sensor (45) with its limited lateral resolution may be complemented by an additional high-resolution camera (57), which is observing the object through a beam splitter or a dichroic mirror in the detection beam path.

## Description

### Field of the invention

The present invention relates to optical coherence tomography (OCT) microscopy, in particular to the three-dimensional microscopic imaging of optically translucent or reflective objects with a resolution in the micrometer range, and instruments and methods to carry out optical coherence tomography microscopy.

### Background of the Invention

The technique of optical coherence tomography (OCT) allows the three-dimensional microscopic imaging of optically translucent or reflective objects. OCT instruments consist of an interferometer, either of the Michelson, the Mach-Zehnder or the Kösters type employing broadband light from a low-coherence source. The terms broadband light and low-coherence light are used interchangeably, indicating electromagnetic fields whose spectral width (full width at half maximum FWHM) exceeds 1% of the central wavelength.

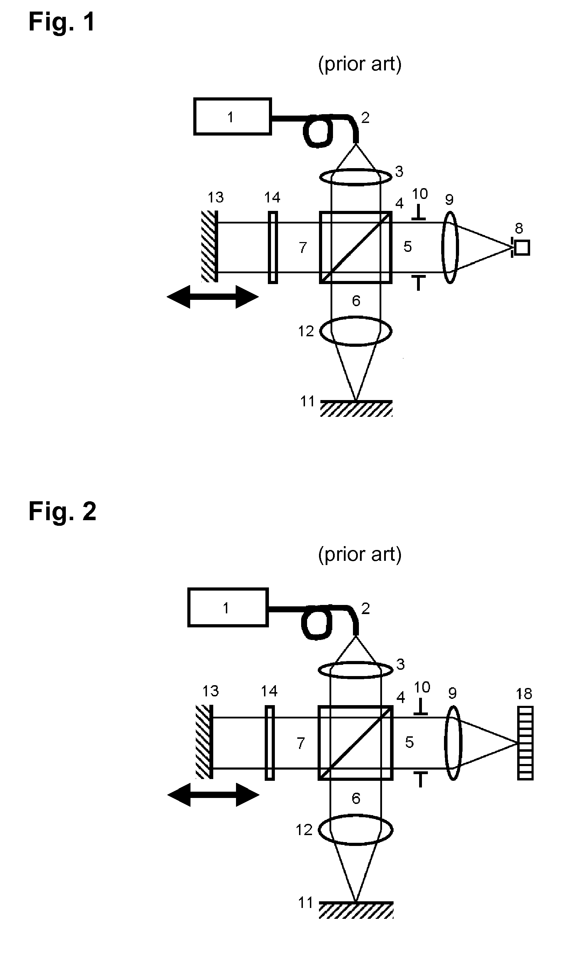

The functional principle of such a prior art optical coherence tomography instrument is illustrated in Figure 1. It consists of an interferometer, in the present case a Michelson interferometer.

Light from a low-coherence source 1 is propagating in a multi-mode fiber 2 to the fiber's exit aperture, from which the light is collimated with lens 3 to a parallel source light beam. Using a beam splitter 4, the source light beam is sent into two arms of the interferometer, a reference beam path 7 containing a moveable reference mirror 13 (whose direction of motion is indicated with the double arrow in the figure) and an object beam path 6, containing the object under study. A object imaging lens 12 focuses the object beam light on a single spot on an object plane 11. The single focus spot on the object 11 is scanned sequentially in all three dimensions of the object space. Light is reflected back from both arms 6, 7, reflected by reference mirror 13 respectively object 11, and interferes in the detection arm 5 of the interferometer, where it is measured with a photodetector 8, allowing the determination of the object's distance in relation to the displacement of the reference mirror.

A spectral bandwidth of Δλ, around a central wavelength λ of the light source corresponds to a coherence length of L_{c}=λ²/Δλ. As a typical example, a near-infrared light source with a spectral bandwidth of 80 nm around the central wavelength of 800 nm has an optical coherence length of 7 µm. An OCT instrument employing such a low-coherence light source can, therefore, distinguish objects in the optical axis if their axial separation amounts to at least a distance of L_{C}. This implies that the axial resolution (the minimum distance of two objects so that they are still distinguishable) of an OCT instrument corresponds to the coherence length L_{C}, which is typically of the order of 1-10 micrometer, depending on the used light source wavelength.

The transverse resolution of an OCT instrument is enhanced by forming a spot of light in the object beam path 6 by employing an imaging lens 12, for example a standard microscope objective. This is illustrated in Figure 1 by the object imaging lens 12 forming a light spot in the object plane 11. To form a complete three-dimensional image of the object, a full three-dimensional scan is required: The reference mirror 13 is scanning the depth of the object, and a two-dimensional lateral scanner is moving the measurement spot over the lateral extension of the object.

Such a basic OCT instrument according to the prior art is described in US 5,321,501, where the interferometric part of the OCT instrument is either realized with multi-mode fibers, or with a free-space optical setup. In both cases, the object remains fixed in object space, while the reference mirror is scanning its depth. Since this corresponds to a significant reduction of the lateral resolution, it is proposed to move the imaging lens synchronously with the reference mirror to move the focus spot axially in object space. In the illustration of Figure 1, this corresponds to moving the imaging lens 12 along the optical axis perpendicular to the optical plane 11, synchronously with the reference mirror 13. Apart from the technical difficulty and additional expenditure of such synchronized motions, the geometric displacement of the measurement focus in the object space does in general not correspond to the change of the optical length in the reference beam 7. The reason for this lies in the differences of the optical paths in the object arm and in the reference arm of the interferometer, where different thicknesses of optical material with different refractive index properties as a function of the light's wavelength are encountered by the propagating polychromatic light beam.

This double problem of synchronized motion and unequal optical properties in reference and object beam paths is overcome by an OCT instrument described in US 5,847,827, teaching an optical system in which the position of the object focus spot and the optical length of the reference path are changed identically and simultaneously with a single electromechanical scanning stage. This is done either by displacing a secondary real focus spot with a moving concave mirror, or by displacing a virtual focus spot with a moving convex mirror. In both cases, the reference mirror cannot be planar and its properties depend on the optical magnification of the instrument, making the system rather difficult to align. Since the optical system with its pinhole and single detector is designed for sequential scanning in all three dimensions, the OCT instrument cannot operate with 3D image set acquisition frequencies of several Hz.

The problems of non-planar mirror and difficult alignment are successfully addressed by US 6,057,920. Although the optical setup is simpler and easier to adjust than the related one of previously mentioned US 5,847,827, this OCT instrument is still designed for sequential scanning in all three dimensions. Since planar mirrors can be used, a faster axial scanning becomes possible through the use of rotating polygonal mirrors. Nevertheless, 3D volumetric image acquisition speeds of several Hz are still not possible, due to the sequential nature of 3D image acquisition.

A complementary solution to the double problem of synchronized motion and unequal optical properties in reference and object beam paths is described in US 2005/0231727 A1. The interferometer makes use of a fixed reference arm, and the complete interferometer is mounted on a single axial scanner. This scanner is used to move the focus spot through the object space. In contrast to other OCT systems, the modulation in the OCT signal is obtained through phase modulation produced by the 2D lateral scanning motion that is implemented with a lateral deflection device also to be found on the axial scanner. As a consequence, the depth scanning is rather slow, because the whole instrument has to be moved in the axial direction. Since only a single measurement spot and a pair of single photodetectors are employed in the setup, no parallel signal acquisition is possible in this approach, rendering 3D volumetric image acquisition speeds of several Hz impossible due to the sequential nature of 3D image acquisition.

The double problem of synchronized motion and unequal optical properties in reference and object beam paths can be circumvented with a technique described in US 2005/0018200 A1. Instead of focusing the beam in the object beam path to a spot using a lens, a cylindrical optical element called Axicon is employed instead, with which a "diffraction-less" light needle is produced in the object. In this way, there is no need for axial scanning in the object space, and it is sufficient to provide a single scanning element for moving the reference mirror. As in the previously discussed approaches, this solution is restricted to a single photodetector, and for this reason, 3D volumetric image acquisition speeds of several Hz cannot be achieved due to the sequential nature of 3D image acquisition.

An important practical problem of dynamic focus control is the requirement to move the imaging lens in the object beam path quickly in the axial direction. This problem is addressed by B. Qi et al. in "Dynamic focus control in high-speed optical coherence tomography based on a microelectromechanical mirror", Optics Communications, Vol. 232, pp. 123-128 (2004). The described solution consists of replacing the moving object lens with its fixed focus by a non-moving lens with adaptable focus. This is achieved with a two-dimensional array of microelectromechanical mirrors under control of a digital processor, so that the focus spot can be electronically moved at high speed through the object space. Again, 3D volumetric image acquisition speeds of several Hz cannot be achieved, due to the sequential nature of 3D image acquisition.

To overcome the problem of sequentially scanning an object in all its three dimensions with a single light spot during an extended period of time, the technique of parallel optical coherence tomography (pOCT) has been invented, in which many longitudinal OCT measurements are carried out simultaneously.

This approach is described in US 5,321,501, and essentially consists of providing and operating a number of conventional OCT channels in parallel. Because of the lack of an integrated solution for the electronic processing in each channel, in practice the number of such conventional OCT channels that can be realized in parallel is restricted to less than 100.

This shortcoming of pOCT has been overcome with an image sensor whose pixels are designed in such a way that each pixel disposes of the necessary analog and digital circuitry to demodulate the OCT signal individually, independently from all other pixels, and at high modulation/demodulation frequencies exceeding 1 MHz.

Such an image sensor is described in EP 1458087, and it is an essential element for the realization of parallel OCT instruments operating in real-time. However, such known pOCT instruments are based on the conventional optical system illustrated in Figure 2, as described for example by S. Beer et al. in "Smart pixels for real-time optical coherence tomography", Proc. SPIE, Vol. 5302, pp. 21-32 (2004). As a consequence, the double problem of synchronized motion and unequal optical properties in reference and object beam paths persists.

The state of the art of imaging pOCT and its associated problems are described with reference to Figure 2. For illustrative purposes, the optical interferometer type chosen is again of the Michelson type. Light from a low-coherence source 1 is transmitted through a multi-mode optical fiber 2, and is collimated with lens 3 on the beam splitter 4. This beam splitter 4 separates the essentially parallel source light beam into the reference beam path 7 and the object beam path 6. The reference beam path 7 consists of a reference mirror 13, which is axially moved by an electromechanical scanner, whose motion is symbolized with the double arrow. The object beam path 6 consists of an imaging lens 12 that focuses the incident light to a spot in the object plane 11. Reflected light from the reference beam path 7 and the object beam path 6 are recombined by beam splitter 4, interfering in the detection beam path 5. The object plane 11 is projected by imaging lens 9 onto the two-dimensional photosensor plane 18. Thus the system of Figure 1 is modified in such a way that a whole plane 11 of the object is imaged simultaneously onto a two-dimensional image sensor 18. A full three-dimensional volumetric data set is obtained by a single linear scan of the reference mirror 13 (illustrated with the double arrow).

An aperture 10 is provided to optimize the speckle size of the interfering light on the photosensor 18. If the aperture is too large, then the speckle size is correspondingly too small, and the fringe contrast on the pixels of the photosensor is reduced. If the aperture is too small, then the speckles become much larger than the pixels, which provides good fringe contrast on the pixel elements of the photosensor, but reduces the total amount of light reaching the photosensor 18.

Depending on the reflectance of the object 11 more or less light is reflected back into the beam splitter. To correct for extreme cases of low reflectance, a neutral density filter 14 is provided in the reference beam path 7, homogenously reducing the amount of light returning from the reference mirror 13 in the reference beam path 7, which enhances the contrast detected in the detection beam path 5.

It is immediately obvious from Figure 2 that an imaging pOCT instrument according to the prior art suffers from limited transverse resolution. The fixed imaging lens 12 is always focused on the same object plane 11, while the reference mirror 13 is examining different depths of the object. Because the imaging lens 12 is not moved, the resulting three-dimensional data set shows reduced transverse resolution, as a function of the scanning distance.

A possible solution of this problem would be to move the imaging lens 12 synchronously with the reference mirror 13. Apart from the technical difficulty of this solution, it works only well for monochromatic light; for polychromatic light, as is necessarily employed in OCT techniques, this simple solution works only ineffectively. The reason for this lies in the differences of the optical paths in the object arm and in the reference arm of the interferometer. In these two arms different thicknesses of optical material with different refractive index properties as a function of the light's wavelength are encountered by the propagating polychromatic light beam. As a consequence, reflected light from the reference mirror interferes with light from various depths of the objects, not just the focus plane.

### Summary of the Invention

A principle object of the invention is to provide an optical coherence tomography (OCT) microscopy system with dynamic coherent focus for imaging optically translucent or reflective objects with a geometric resolution in the micrometer range in all three dimensions, with an acquisition speed approaching or surpassing video-speed, i.e. 25 or 30 Hz, for complete volumetric image sets.

A further object of the invention is to provide such a system for the parallel OCT technique.

Another object of the invention is to realize an OCT system for the high-speed three-dimensional microscopic imaging of optically translucent or reflective objects in which it is desirable or necessary to change the optical magnification quickly and reliably, without the need for re-adjusting or re-calibrating the instrument.

Yet another object of the invention is to provide a pOCT instrument in which the three-dimensional volumetric reflectance image is complemented with a precisely focused set of high-resolution black-and-white or color images.

These objects and other problems are addressed by an OCT system according to the invention. Particularly, the present invention provides a high-speed imaging pOCT apparatus with dynamic coherent focus and balanced optical lengths in the reference and the object beam path, requiring only a single electromechanical scanner. This is achieved with an interferometer (for example of the Michelson, Mach-Zehnder or Kösters type), with a plane reference mirror, and identical lenses in the reference and the object beam path, so that the geometrical displacement of the measurement focus in the object beam path is equal to the change in optical length in the reference beam path. This gives the OCT apparatus dynamic coherent focus ability over the full scanning distance.

Reference mirror and focus spot in the object space are scanned simultaneously with a single electromechanical displacement element, allowing for massively parallel OCT measurement, so that real-time or video-speed 3D volumetric image acquisition becomes possible.

All optical elements that must be replaced to obtain a different optical magnification are contained in a single exchangeable cartridge that is put into place on the linear scanner. For changing the optical magnification, this one single optical module is simply exchanged by another.

Each pixel in the 2D-image sensor is individually capable of demodulating the OCT signal detected by its own photosensitive device, extracting information on the local envelope amplitude and the local phase.

The OCT image sensor with its limited lateral resolution can be complemented by an additional high-resolution black-and-white or color camera, observing the object through a beam splitter or a dichroic mirror in the detection beam path. Said high-resolution camera is synchronized with the motion of the linear scanner and the associated acquisition of three-dimensional volumetric image data sets, so that a complementary set of high-resolution black-and-white or color images are available, whose axial positions are registered with respect to the OCT volumetric image set.

### Brief Description of the Drawings

Figure 1 schematically shows an optical coherence tomography apparatus according to the state of the art, while Figure 2 shows a parallel optical coherence tomography apparatus according to the state of the art, as already discussed above.
Figure 3 schematically shows a parallel optical coherence tomography apparatus with dynamic coherent focus, according to the present invention.
Figure 4 shows a parallel optical coherence tomography apparatus with dynamic coherent focus, according to the present invention, and simultaneous high-resolution image acquisition.
Figure 5 shows an embodiment of a pOCT apparatus according the invention, similar to the embodiment illustrated in Figure 4, with a simplified optical setup.

### Detailed description of the Preferred Embodiments

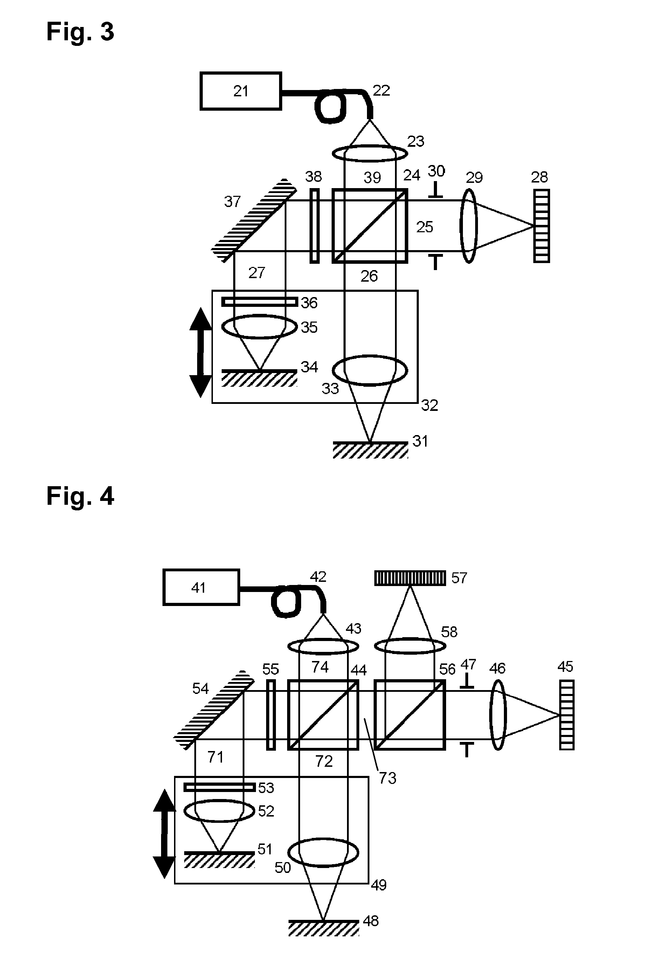

Figure 3 schematically shows a first embodiment of a pOCT apparatus with dynamic coherent focus according to the present invention, comprising a Michelson interferometer. A pOCT apparatus according to the invention, however, could be realized also with any other type of interferometer, such as the Mach-Zehnder or the Kösters interferometer. Light from a low-coherence light source 21 propagates in a multi-mode fiber 22 to an exit aperture, from which the source light is collimated by lens 23 into a parallel source light beam 39, and enters the interferometer setup. The beam splitter 24 partitions the incident source light beam into an object beam 26 and a reference beam 27. The light of the object beam 26 is focused by object imaging lens 33 to a object focus plane 31, on or in the object under study. The light of the reference beam 27 is deflected by a planar deflection mirror 37 to the same direction as the object beam 37. Said reference beam 27 is then focused onto a plane reference mirror 34, by reference imaging lens 35. The optical path from the beam splitter 24 to the focus plane 31 has to be identical to the optical path from the beam splitter 24 to the reference mirror 34.

If the lenses 33, 35 in the object beam path 26 and the reference beam path 27 are identical, the light in the reference beam path and the object beam path traverses exactly the same distance, through identical refractive material, so that the geometrical displacement of the measurement focus in the object beam path 27 is exactly equal to the change in optical length in the reference beam path 26. This can also be achieved with imaging lenses 33 and 35 that are different, by introducing a compensation plate 36 in one or both of the two beam paths, so that in total the same thickness and the same type of refractive material is traversed. This ensures that the geometrical displacement of the measurement focus in the object beam path 26 is exactly equal to the change in optical length in the reference beam path 27.

The problem of synchronizing the motion of object imaging lens 33 and reference mirror 34 is solved by fixing the position of the reference mirror 34, the object imaging lens 33, the reference imaging lens 35, and preferably also the compensation plate 36, in relation to each other. The resulting unit is then moved along the optical axis by one single electromechanical scanner/actuator, as illustrated by the double arrow.

In a preferred embodiment said optical elements 33, 34, 35, 36 are arranged in one single, exchangeable cartridge 32. Since all optical elements (imaging lenses 33 and 35, compensation plates 36) that need to be exchanged to obtain a different optical magnification are placed in one single cartridge 32, the optical magnification of the imaging pOCT system according to the invention can be quickly and simply changed by exchanging a cartridge with a first magnification level with another cartridge with a second magnification. No other element of the optical system must be changed, and no time-consuming and complicated readjustments are necessary.

The light reflected back from the focus plane 11 into the object beam 26 and the reflected light traveling back in the reference beam 27 is subsequently recombined by beam splitter 24, and enters the detection beam path 25, where it is imaged by a detector imaging lens 29 onto the surface of the two-dimensional OCT image sensor 28. The individual pixel elements of the sensor 28 are individually capable of demodulating the received OCT signal. Such an OCT image sensor is disclosed, for example, in EP 1458087. An aperture 30 can be employed to optimize the fringe contrast in the sensor plane, as a function of wavelength, focal distance and pixel size. Depending on the reflectance of the object 31 more or less light is reflected back into the beam splitter.

To correct low reflectance from the object, a neutral density filter 38 can be arranged in the reference beam path 27, reducing the amount of light returning from the reference mirror 34, and enhancing the contrast detected in the detection beam path 25.

In a further advantageous embodiment it would also be possible to arrange a compensation plate in the object beam, which would correct for the differences of the reference imaging lens and the object imaging lens. This approach allows for the realization on an exchangeable cartridge containing only the object imaging lens, which must be exchanged anyway, and the corresponding compensation plate. Such a simplified exchangeable cartridge would be part of the optical unit that is linearly moved along the optical axis by the single electromechanical scanner/actuator.

A second embodiment of a pOCT instrument according to the present invention, with a synchronized, complementary high-resolution image acquisition system, is shown in Figure 4. The setup used is similar to the pOCT instrument disclosed in Figure 3. Since OCT image sensors usually exhibit a somewhat limited lateral resolution, the OCT data acquisition system is complemented by an additional high-resolution black-and-white or color camera 57, looking at the same focus plane 48 of the object as the OCT image sensor 45, through a second beam splitter or dichroic mirror 56.

The functional principle of this second embodiment, particularly the whole interferometer part, can be essentially identical to the first embodiment shown in Figure 3. Reflected light propagating back in the object beam path 72 and in the reference beam path 74 is recombined by beam splitter 44, and enters the detection beam path 73, where it encounters a second beam splitter or dichroic mirror 56. Light in the detection beam 73 that travels straight through the beam splitter or dichroic mirror 56 is projected by detector imaging lens 46 onto the OCT image sensor 45, while a part of the detection beam light is deflected by the second beam splitter or dichroic mirror 56 towards the high-resolution image sensor 57, where it is projected by second detector imaging lens 58 onto high-resolution image sensor 57.

If no additional illumination of the object other than from the low-coherence light source 41 is used, the beam splitting element 56 should be a beam splitter. If, however, an additional light source is employed for lighting the object, with a spectral range different to the low-coherence light source 41, a dichroic mirror is preferable. A suitable dichroic mirror 56 will let the low-coherence light part pass to the OCT image sensor 45, and part of the detection beam having other wavelengths will be deflected to the high-resolution image sensor 57.

The image acquisition process with the high-resolution photosensor 57 is preferably synchronized with the OCT volumetric image acquisition using the OCT image sensor 45. As a consequence it must be known for each high-resolution image taken with photo sensor 57, from which object focus plane 48 it has been taken, i.e. which object depth plane was in focus at the time of image acquisition. This allows, for example, fusing the OCT images with the high-resolution images, and forming highly resolved volumetric images with additional information such as the local color. If a particular object has been identified, for example, in the OCT depth image, then the corresponding high-resolution black-and-white or color image can be retrieved, in which this particular object can be inspected with much higher lateral resolution, and with additional information such as color.

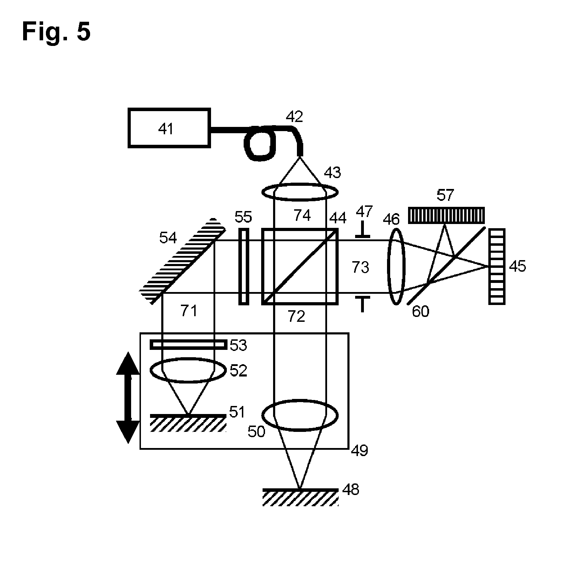

Another preferred embodiment of the imaging pOCT apparatus according to the present invention is shown in Figure 5, having a simplified optical setup, in which a single detector imaging lens 46 forms an image both on the OCT image sensor 45 as well as on the high-resolution image sensor 57. This is accomplished by placing a beam splitter or dichroic mirror 60 in the detection beam path 73 between detector imaging lens 46 and OCT image sensor 45.

This embodiment essentially performs the same function as the embodiment disclosed in Figure 4, but its optical setup is simpler and easier to align. It consists of the same optical elements in the interferometer part, and the differences lie only in the detection beam path 73. Light reflected back in the object beam path and in the reference beam path is recombined by the beam splitter 44, and is imaged onto the image sensor planes 45 and 57 by one single detector imaging lens 46. A beam splitter or dichroic mirror 60 is placed in the detection beam path 73 after the detector imaging lens 46, so that the image of the focus plane 48 on or in the object is projected at the same time on the surface of the OCT image sensor 45 and on the surface of the high-resolution black-and-white or color image sensor 57. Both images will be simultaneously in focus if the optical distances from the imaging lens 46 to the surfaces of the image sensors 45 and 57 are identical.

As detailed above, the aperture 47 is employed to optimize the fringe contrast in the sensor plane, as a function of wavelength, focal distance and pixel size. In the shown embodiment it influences also the amount of light impinging on the high-resolution photo sensor 57.

If no additional lighting other than the low-coherence light source 41 is used, then the reflective element 60 should be a beam splitter. If an additional light source is used, emitting light in other spectral ranges than the low-coherence light source 41, then a dichroic mirror is preferable.

In yet a further embodiment a plane deflection mirror is arranged in the object path instead of the reference path, so that the object beam is deflected by 90° to a direction parallel to the reference path. It is also possible to use mirrors in both beam paths, for example deflecting both beams by 45°, in order to obtain parallel beams.

This concept can be varied in other ways. The remaining requirement is that both the reference beam and the object beam are parallel prior to focusing them on the reference mirror respectively the object focus plane, since this will allow for the synchronous linear movement of both elements with one single linear actuator.

### List of Reference Numerals

- 1: low-coherence light source
- 2: multi-mode fiber
- 3: collimating lens
- 4: beam splitter
- 5: detection beam path
- 6: object beam path
- 7: reference beam path
- 8: photodetector
- 9: detector imaging lens
- 10: aperture
- 11: object focus plane
- 12: object imaging lens
- 13: moveable reference mirror
- 14: neutral density filter
- 18: image sensor
- 21: low-coherence light source
- 22: multi-mode fiber
- 23: collimating lens
- 24: beam splitter
- 25: detection beam
- 26: object beam
- 27: reference beam
- 28: image sensor
- 29: detector imaging lens
- 30: aperture
- 31: object focus plane
- 32: cartridge
- 33: object imaging lens
- 34: planar reference mirror
- 35: reference imaging lens
- 36: compensation plate
- 37: planar deflection mirror
- 38: neutral density filter
- 39: source light beam
- 41: low-coherence light source
- 42: multi-mode fiber
- 43: collimating lens
- 44: first beam splitter
- 45: first image sensor
- 46: first detector imaging lens
- 47: aperture
- 48: object focus plane
- 49: cartridge
- 50: object imaging lens
- 51: planar reference mirror
- 52: reference imaging lens
- 53: compensation plate
- 54: planar deflection mirror
- 55: neutral density filter
- 56: second beam splitting means
- 57: high-resolution image sensor
- 58: second detector imaging lens
- 60: second beam splitting means
- 71: reference beam
- 72: object beam
- 73: detection beam
- 74: source light beam

## Claims

1. An optical coherence tomography apparatus for recording three-dimensional images of an optically translucent or reflective object, comprising
- a light source (21, 41), able to provide broadband, low-coherence light;
- a collimating lens (23, 43), arranged to collimate said light to a parallel source light beam (39, 74);
- a beam splitter (24, 44), arranged to split up said source light beam (39, 74) into a reference beam (27, 71) and an object beam (26, 72), and arranged to recombine the reference beam (27, 71) and the object beam (26, 72) to a detection beam (25, 73);
- a movable, planar reference mirror (34, 51), arranged to reflect said reference beam (27, 71) back to the beam splitter (24, 44);
- a movable object imaging lens (33, 50); arranged to focus said object light beam (26, 72) to an object focus plane (31, 48), and to collimate light reflected from said object focus plane (31, 48) back to the object light beam (26, 72);
- actuator means for synchronously moving the reference mirror (34, 51) and the object imaging lens (33, 50);
- a photo sensor (28, 45), able to convert incident light to an electric current signal; and
- a detector imaging lens (29, 46), arranged to focus the detection beam (25, 73) coming from the beam splitter (24, 44) to the photo sensor (28, 45);
**characterized in that**
the apparatus comprises
- one or more planar deflection mirrors (37, 54) that are arranged to deflect the reference beam (27, 71) and/or the object beam (26, 72) exiting the beam splitter (24, 44) in such a way that the reference beam (27, 71) and the object beam (26, 72) are oriented parallel to each other; and
- a movable reference imaging lens (35, 52), arranged to focus the reference beam (27, 71) coming from the beam splitter (24, 44) to the plane of the reference mirror (34, 51);
wherein the reference mirror (34, 51), the reference imaging lens (35, 52), and the object imaging lens (33, 50) have fixed positions to each other, and are arranged to be moved as a unit by the actuator means.

2. The apparatus according to claim 1, **characterized in that** the photo sensor is a two-dimensional image sensor (28, 45) with a plurality of pixel elements.

3. The apparatus according to claim 2, **characterized in that** the pixel elements of the two-dimensional image sensor (28, 45) are able to individually demodulate the detected signal.

4. The apparatus according to claim 2 or 3, **characterized in that** a second beam splitting means (56, 60) for splitting a light beam into two beams are arranged in the detection beam path (25, 73), and that one beam is focused on the two-dimensional image sensor (28, 45), and the other beam is focused on an additional two-dimensional high-resolution image sensor (57).

5. The apparatus according to claim 4, **characterized in that** the second beam splitting means (56, 60) is a beam splitter (56) or a dichroic mirror (60).

6. The apparatus according to claim 4 or 5, **characterized in that** the detector imaging lens (46) is placed between the beam splitter (24, 44) and the second beam splitting means (56, 60).

7. The apparatus according to claim 4 and 5, **characterized in that** one detector imaging lens (46) is placed between the beam splitting means (56, 60) and the image sensor (28, 45), and a second detector imaging lens (58) is placed between the beam splitting means (56, 60) and the high-resolution image sensor (57).

8. The apparatus according to any of claims 1 to 7, **characterized in that** the reference imaging lens (35, 52), and the object imaging lens (33, 50) have identical optical properties and geometric dimensions.

9. The apparatus according any of claims 1 to 7, **characterized in that** one or more compensation plates (36, 53) are placed in the reference beam (27, 71) and/or the object beam (26, 72), in a fixed position in relation to the reference mirror (34, 51), the reference imaging lens (35, 52), and the object imaging lens (33, 50),
wherein the one and more compensation plates (36, 53) correct for differences in the optical properties and geometric dimensions of the reference imaging lens (35, 52), and the object imaging lens (33, 50), so that the total effective thickness and the refractive properties of the materials in both the reference beam path (27, 71) and the object beam (26, 72) path are identical.

10. The apparatus according to claim any of claims 1 to 9, **characterized in that** the reference mirror (34, 51), the reference imaging lens (35, 52), and the object imaging lens (33, 50) are arranged in an exchangeable cartridge (32, 49).

11. The apparatus according to any of claims 1 to 10 **characterized in that** a compensation plate (36, 53) is placed in the object beam (26, 72), in a fixed position in relation to the object imaging lens (33, 50), and that the compensation plate (36, 53) and the object imaging lens (33, 50) are arranged in an exchangeable cartridge (32, 49).

12. A cartridge for use in an apparatus according to any of claims 1 to 11, comprising a planar reference mirror (34, 51), a reference imaging lens (35, 52), arranged to focus an incident parallel light beam to the reference mirror (34, 51), and an object imaging lens (33, 50), wherein the optical axis of the reference imaging lens (35, 52) and the object imaging lens (33, 50) are parallel.

13. A cartridge for use in an apparatus according to claim 12, **characterized by** one or more compensation plates (36, 53), arranged to correct for differences in the optical properties and geometric dimensions of the reference imaging lens (35, 52), and the object imaging lens (33, 50).

14. A cartridge for use in an apparatus according to any of claims 1 to 11, comprising an object imaging lens (33, 50) and a compensation plate (36, 53).
